Europäisches Patentamt

European Patent Office

Office européen des brevets

Publication number: **0 288 938**
**A2**

# EUROPEAN PATENT APPLICATION

Application number: 88106540.3

Int. Cl.4: **B23D 25/04** , **B23D 21/04**

Date of filing: 23.04.88

Priority: 24.04.87 IT 8336087

Date of publication of application:
02.11.88 Bulletin 88/44

Designated Contracting States:
AT BE CH DE ES FR GB GR LI LU NL SE

Applicant: **DANIELI & C. OFFICINE
MECCANICHE S.p.A.**
**Via Nazionale, 19**
**I-33042 Buttrio (UD)(IT)**

Applicant: **DANIELI NATISONE Spa**
**Via Azzida, 152**
**I-33049 San Pietro Al Natisone (UD)(IT)**

Inventor: **Buglioni, Gianluigi**
**Via Pradamano 22**
**Buttrio Udine(IT)**

Representative: **Petraz, Gilberto Luigi**
**G.L.P. S.a.s. di Gilberto Petraz P.le Cavedalis
6/2**
**I-33100 Udine(IT)**

## Flying device to bevel and cut.

Flying device to bevel and cut elements such as tubes and bars (26), which comprises a plurality of tools (23) able to rotate about their own axis at least during the cutting action and able to rotate at the same time about the axis (28) of the element (26), such tools (23) being provided with a radial movement in relation to such axis (28) of the element (26), such radial movement taking place on a plane normal to the axis (28) of the element (26).

fig. 2

EP 0 288 938 A2

## FLYING DEVICE TO BEVEL AND CUT

This invention concerns a device to bevel and cut products in the form of bars. To be more exact, the invention concerns a device to bevel, cut and possibly reduce the dimensions of a required tract of a substantially circular element such as a bar or tube or another like element.

For the sake of simplicity, the word "bar" shall be deemed to include hereinafter hollow or solid bars.

This device is properly applied to all cases where it is necessary to perform the cutting, bevelling or dimensional reduction of the element on an industrial scale in very short times.

At the present time the devices of the state of the art, particularly so as regards bevelling, include rotary tools such as lathe mandrels, circular saws, rotary saws, etc. and cannot obtain the required finished result, above all where processing in line is performed and a very high output is required.

Moreover, such devices form part of appropriate work stations separate from the line producing drawn bars or tubes.

The present applicants have designed, tested and embodied this invention so as to be able to carry out mass processing by cutting and simultaneously bevelling bars which, for instance, have already been drawn.

According to the invention a plurality of rotary tools is set in rotation about the axis of the element to be cut and bevelled.

Besides their movement of rotation about their own axis, these tools are provided with a movement of rotation about the axis of the element to be cut.

Moreover, according to the invention, such rotary tools are provided also with a traversing movement, which takes them from a radially distant position towards the axis of the element to be cut until they substantially reach that axis.

The traversing movement is imparted simultaneously to all the rotary tools and can be graduated as required as regards its thrust and its traversing speed.

According to a variant such simultaneous movement is graduated over a period of time.

The rotary tool may be conformed as a cutting tool or be combined with a bevelling tool or else may be combined also with a tool to reduce the section of the element to be processed.

The invention is therefore embodied with a flying device to bevel and cut elements such as tubes and bars, which is characterized in that it comprises a plurality of tools able to rotate about their own axis at least during the cutting action and able to rotate at the same time about the axis of the element, such tools being provided with a radial movement in relation to such axis of the element, such radial movement taking place on a plane normal to the axis of the element.

With the help of the attached figures, which are given as a non-restrictive example, let us now see a preferred embodiment of the invention. The figures show the following:-

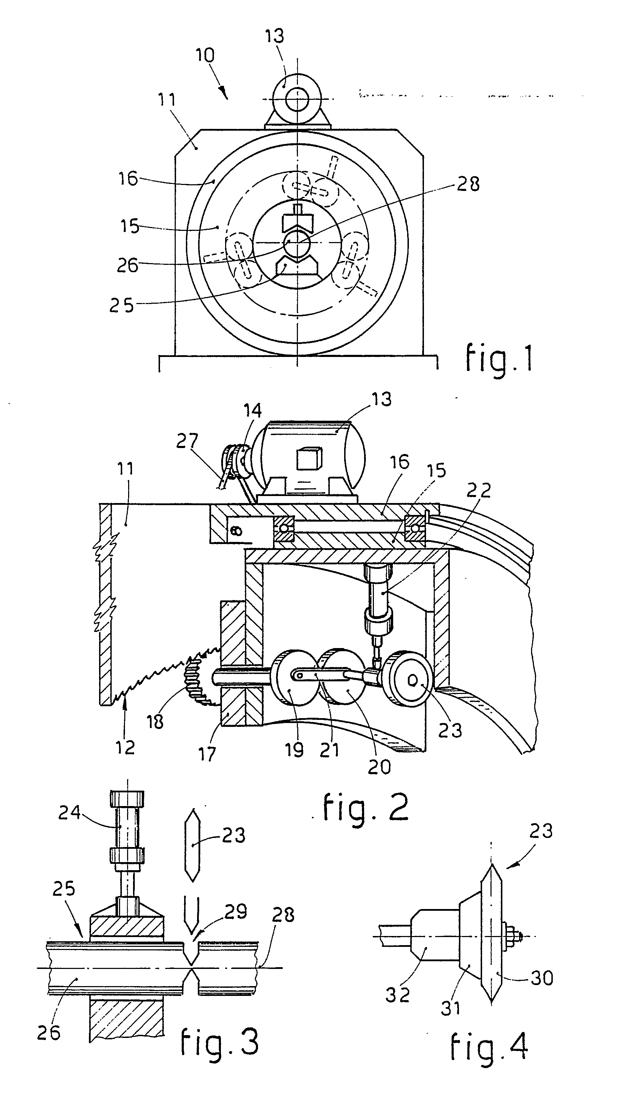

Fig.1 gives a front axial view of a device according to the invention;

Fig.2 shows a three-dimensional section of a part of the device of Fig.1;

Fig.3 shows the cutting method of the device according to the invention;

Fig.4 shows a combined multipurpose tool.

A bevelling and cutting device 10 comprises a bearing frame 11 with a substantially circular hole, on the periphery of which are gear teeth 12, in this case internal gear teeth.

A stationary support 16 is anchored on the bearing frame 11 coaxially with the gear teeth 12 and in this case is able to support a motor 13 which bears a first pulley 14.

Moreover, the stationary support 16 holds a rotary support 15 able to rotate about its own axis.

The rotary support 15 is coupled to a second pulley 17, which is set in rotation by the first pulley 14 of the motor 13 by means of belts 27.

In this example the rotary support 15 comprises a pair of gear wheels 18-19, of which the first gear wheel 18 is an epicyclic gear and meshes with the gear teeth 12 on the bearing frame 11.

The second gear wheel 19 is coaxial with and is set in rotation by the first gear wheel 18 and comprises an oscillatory support 21, which in turn bears a third gear wheel 20, which meshes with the second gear wheel 19.

The third gear wheel 20, being set in rotation by the second gear wheel 19, sets in rotation a shaft that comprises terminally a tool 23.

As can be seen, the rotary support 15 is set in rotation by the second pulley 17 about the axis 28, which coincides substantially with the axis of the element 26 to be processed.

When the rotary support 15 is rotated, the epicyclic first gear wheel 18 is also set in rotation and in turn sets in rotation the second gear wheel 19, which transmits motion to the third gear wheel 20, whence the motion is transmitted to the tool 23.

The third gear wheel 20 and the tool 23 can oscillate, owing to the oscillatory support 21, about the axis of the second gear wheel 19 towards the axis 28 of the element 26 to be processed. In this example such oscillation is imparted by a jack 22.

According to the invention the rotation of the rotary support 15 sets the tool 23 in rotation, while the action of the jack 22 causes the tool 23 to oscillate about the axis of the second gear wheel 19 until the tool reaches substantially the axis 28 of the element 26 and performs a cut 29.

Two or more tools 23 can be included in one device 10 and can process the element 26 at one and the same time.

The tools 23 are oscillated by the action of the jack 22, which is fed with a fluid under pressure. If this pressure is regulated, the speed of cutting can be regulated to suit the properties of the element 26 to be processed.

The element 26 is clamped in a vice 25, which can be clamped by a jack 24 for instance.

The tool 23 may consist of one single cutting tool 30 or of a combination of a cutting tool 30 with a bevelling tool 31 or else of a cutting tool 30 combined with a bevelling tool 31 and with a possible section-reducing tool 32.

According to a variant the tool 23 may consist only of a section-reducing tool 32 combined with a bevelling tool 31.

According to a variant, where the tool is conformed as a cutting blade, it 23 can be made freely rotatable about its own axis, so that the cutting of the element 26 is performed by the circumferential rolling of the tool 23 on the surface of the element 26.

## Claims

1 - Flying device to bevel and cut elements such as tubes and bars (26), which is characterized in that it comprises a plurality of tools (23) able to rotate about their own axis at least during the cutting action and able to rotate at the same time about the axis (28) of the element (26), such tools (23) being provided with a radial movement in relation to such axis (28) of the element (26), such radial movement taking place on a plane normal to the axis (28) of the element (26).

2 - Device as claimed in Claim 1, in which a tool-holder support (15) is able to rotate about the axis of the element (26).

3 - Device as claimed in Claim 1 or 2, in which the rotation of the tool (23) is obtained by cooperation between a first gear wheel (18) able to rotate about the axis of the element (26) and stationary gear teeth (12).

4 - Device as claimed in any claim hereinbefore, in which the tool (23) can oscillate (21) about the axis of the first rotary gear wheel (18) which imparts motion to the tool, such oscillation causing a radial movement.

5 - Device as claimed in Claim 1 or 2, in which the rotation of the tool (23) is obtained by cooperation between the periphery of the tool (23) and the element (26) to be cut.

6 - Device as claimed in any claim hereinbefore, in which the oscillation of the tool (23) is obtained by a jack (22).

7 - Device as claimed in any claim hereinbefore, in which the oscillation of the tools (23) takes place substantially at one and the same time.

8 - Device as claimed in any claim hereinbefore, in which the working pressure of the tools (23) on the element (26) can be regulated.

9 - Device as claimed in any claim hereinbefore, in which the element (26) is stationary.

10 - Device as claimed in any claim hereinbefore, in which the tool (23) is individually conformed (30-31-32).

fig.1

fig. 2

fig.3

fig.4